# EUROPÄISCHE PATENTANMELDUNG

(11) **EP 1 914 125 A1**
(43) Veröffentlichungstag der Anmeldung: **23.04.2008**
(21) Anmeldenummer: 07020551.3
(22) Anmeldetag: 19.10.2007
(51) Int. Cl.: B60R 21/215

(54) **Innenverkleidungsteil für ein Kraftfahrzeug**

(30) Priorität: 19.10.2006 DE 102006049317
(71) Anmelder: GM Global Technology Operations, Inc., Detroit, MI 48265-3000 (US)
(72) Erfinder: Hoyer, Erich, 64569 Nauheim (DE)
(74) Vertreter: Daniel, Ulrich W.P.

(57) **Zusammenfassung**

Die vorliegende Erfindung betrifft ein Innenverkleidungsteil (2) für ein Kraftfahrzeug mit einer Austrittsöffnung (14) für einen aufblasbaren Gassack (10), wobei die Austrittsöffnung (14) von einer Abdeckung (12) verdeckt ist. Die Abdeckung (12) ist mit einem Schwenkmittel (24) an dem Innenverkleidungsteil (2) angelenkt. Die Abdeckung (12) ist mit parallel zu dem Schwenkmittel (24) verlaufenden Sollknickstellen (30, 32, 34, 36, 38) versehen. Die vorliegende Erfindung betrifft ferner ein Kraftfahrzeug mit einem solchen Innenverkleidungsteil (2).

## Beschreibung

Die vorliegende Erfindung betrifft ein Innenverkleidungsteil für ein Kraftfahrzeug mit einer Austrittsöffnung für einen aufblasbaren Gassack, wobei die Austrittsöffnung von einer Abdeckung verdeckt ist, die mit einem Schwenkmittel an dem Innenverkleidungsteil angelenkt ist. Die vorliegende Erfindung betrifft ferner ein Kraftfahrzeug mit einem solchen Innenverkleidungsteil.

Aus dem Stand der Technik sind Innenverkleidungsteile für Kraftfahrzeuge gemäß dem Oberbegriff bekannt. So offenbart die DE 196 40 434 C2 ein Innenverkleidungsteil mit einer mehrschichtig aufgebauten, zerreißbaren Abdeckung für die Austrittsöffnung eines aufblasbaren Gassackes. Aus der DE 44 18 582 ist eine Instrumententafel für ein Kraftfahrzeug bekannt, die an einer vorgesehenen Bruchstelle durch partielle oder umlaufende Einschnitte geschwächt ist. Weiterhin wird auf die DE 41 37 926 verwiesen, die eine Abdeckung für einen aufblasbaren Gassack in einem Kraftfahrzeug zeigt. Die Gassackabdeckung ist dabei als Teil einer Instrumententafel ausgebildet und weist eine Vielzahl von in Reihe angeordneten Perforationen auf. Die Perforationen bilden dabei eine Bruchlinie.

Die bekannten Innenverkleidungsteile haben sich zwar bewährt, weisen jedoch den Nachteil auf, im Augenblick des Aufklappens relativ groß und sperrig zu sein. Der Entfaltungs- oder Schussweg des aufblasbaren Gassackes wird somit unnötig eingeengt.

Es ist daher Aufgabe der vorliegenden Erfindung, ein Innenverkleidungsteil für ein Kraftfahrzeug zu schaffen, das unabhängig von dem zur Verfügung stehenden Expansionsraum ausreichend Platz für einen sich explosionsartig aufblasenden Gassack bietet. Der vorliegenden Erfindung liegt ferner die Aufgabe zugrunde, ein Kraftfahrzeug mit einem solchen vorteilhaften Innenverkleidungsteil zu schaffen.

Diese Aufgabe wird durch die in Patentanspruch 1 bzw. 18 angegebenen Merkmale gelöst. Vorteilhafte Ausführungsformen der Erfindung sind Gegenstand der unteransprüche.

Das erfindungsgemäße Innenverkleidungsteil für ein Kraftfahrzeug weist eine Austrittsöffnung für einen aufblasbaren Gassack auf, wobei die Austrittsöffnung von einer Abdeckung verdeckt ist, die mit einem Schwenkmittel an dem Innenverkleidungsteil angelenkt ist. Die Abdeckung ist mit parallel zu dem Schwenkmittel verlaufenden Sollknickstellen versehen.

Das erfindungsgemäße Innenverkleidungsteil kann somit dem sich aufblasenden Gassack bei unterschiedlichen Innenraumverhältnissen genügend Expansionsraum zur Verfügung stellen. Dem Gassack steht dadurch ausreichend Platz zur Verfügung, und die Abdeckung behindert den Öffnungsvorgang nicht.

In einer bevorzugten Ausführungsform des erfindungsgemäßen Innenverkleidungsteiles sind die Sollknickstellen geradlinig ausgebildet. Auf diese Weise ist sichergestellt, dass die Oberflächengröße der Abdeckung im Falle eines explosionsartigen Aufblasens des Gassackes zuverlässig verringert wird.

In einer weiteren Ausführungsform des erfindungsgemäßen Innenverkleidungsteiles sind die Sollknickstellen linienförmig, vorzugsweise durchgehend ausgebildet. Dadurch wird erreicht, dass die Abdeckung auch bei außergewöhnlicher Raumformgestaltung des Innenverkleidungsteiles zuverlässig aus der Schussrichtung des sich aufblasenden Gassackes gebracht werden kann.

Um den Arbeitsaufwand bei der Herstellung der Abdeckung so klein wie möglich zu halten, sind die Sollknickstellen in einer weiteren bevorzugten Ausführungsform des erfindungsgemäßen Innenverkleidungsteiles strichpunktiert ausgebildet.

Gemäß einer bevorzugten Ausführungsform des erfindungsgemäßen Innenverkleidungsteiles sind die Sollknickstellen gelasert. Durch das Lasern lassen sich schnell und kostengünstig sehr genaue Sollknickstellen erzeugen. Eine Nachbearbeitung ist nicht notwendig, was wiederum kosteneffizient ist.

Gemäß einer weiteren bevorzugten Ausführungsform des erfindungsgemäßen Innenverkleidungsteiles sind die Sollknickstellen Material verdichtend gelasert. Dadurch werden Materialverluste an dem Innenverkleidungsteil vermieden. Das Entsorgen von Materialresten entfällt, was wiederum die Kosteneffizienz erhöht und die Produktionskosten des erfindungsgemäßen Innenverkleidungsteiles senkt.

In einer bevorzugten Ausführungsform des erfindungsgemäßen Innenverkleidungsteiles sind die Sollknickstellen in Einbaulage in der Unterseite der Abdeckung als längs verlaufende Vertiefungen ausgebildet. Dadurch wird ein sicheres Öffnen und Freigeben der Austrittsöffnung gewährleistet.

In einer weiteren bevorzugten Ausführungsform des erfindungsgemäßen Innenverkleidungsteiles sind die Sollknickstellen in Einbaulage in der Oberseite der Abdeckung als längs verlaufende Vertiefungen ausgebildet. Auch in dieser bevorzugten Ausführungsform wird ein sicheres Öffnen und Freigeben der Austrittsöffnung gewährleistet.

In einer weiteren besonders bevorzugten Ausführungsform des erfindungsgemäßen Innenverkleidungsteiles sind die Sollknickstellen in Einbaulage abwechselnd in der Oberseite und in der Unterseite der Abdeckung als längs verlaufende Vertiefungen ausgebildet. Dadurch kann eine besonders umfangreiche Anpassung der Abdeckung an unterschiedliche Raumverhältnisse erreicht werden. Dem sich aufblasenden Gassack steht stets ein genügend großer Expansionsraum zur Verfügung.

Gemäß einer bevorzugten Ausführungsform des erfindungsgemäßen Innenverkleidungsteiles unterteilen die Sollknickstellen die Abdeckung in Segmente. Beim explosionsartigen Aufblasen des Gassackes bewegt sich die Abdeckung sicher aus der Entfaltungs- bzw. Schussrichtung.

Gemäß einer weiteren bevorzugten Ausführungsform des erfindungsgemäßen Innenverkleidungsteiles sind die Segmente in den Sollknickstellen relativ zueinander knickbeweglich ausgebildet. Dadurch wird ein zuverlässiges Zusammenfalten der Abdeckung, unabhängig von Einbauort und Einbaulage des Innenverkleidungsteiles im Kraftfahrzeug, sichergestellt.

In einer bevorzugten Ausführungsform des erfindungsgemäßen Innenverkleidungsteiles weisen die Vertiefungen der Sollknickstellen ein U-förmiges Profil auf. Durch ein U-förmiges Profil kann eine große Knickbeweglichkeit der durch die Sollknickstellen miteinander verbundenen Segmente bei relativ kleinflächigen Abdeckungen erreicht werden.

In einer weiteren vorteilhaften Ausführungsform des erfindungsgemäßen Innenverkleidungsteiles weisen die Vertiefungen der Sollknickstellen ein V-förmiges Profil auf. Durch ein V-förmiges Profil wird eine große Knickbeweglichkeit der durch die Sollknickstellen miteinander verbundenen Segmente bei großflächigen Abdeckungen ermöglicht. Eine Abdeckung mit Vertiefungen, die ein V-förmiges Profil aufweisen, gewährleistet bei einer großflächigen Abdeckung eine höhere Stabilität der miteinander verbundenen Segmente und eine hohe Stabilität des gesamten Innenverkleidungsteiles.

In einer weiteren besonderes vorteilhaften Ausführungsform des erfindungsgemäßen Innenverkleidungsteiles schließt die Oberseite der Abdeckung bündig mit der Innenverkleidung ab. Hierdurch stellt sich ein einheitlicher Anblick des Innenverkleidungsteiles dar und störende Kanten und Ränder werden vermieden.

Gemäß einer besonders bevorzugten Ausführungsform des erfindungsgemäßen Innenverkleidungsteiles ist es vorgesehen, dass die Oberseite der Abdeckung die gleiche Oberflächenstruktur wie das Innenverkleidungsteil aufweist.

In einer bevorzugten Ausführungsform des erfindungsgemäßen Innenverkleidungsteiles ist die Abdeckung mit ihrer Oberseite in Richtung der Innenseite einer Frontscheibe des Kraftfahrzeuges hin öffnend ausgebildet. Dies ist dann der Fall, wenn das Innenverkleidungsteil insbesondere in dem Frontbereich eines Kraftfahrzeuges, beispielsweise der Beifahrerseite, eingebaut ist.

In einer besonders bevorzugten Ausführungsform des erfindungsgemäßen Innenverkleidungsteiles ist das Innenverkleidungsteil eine Armaturentafel. Die Armaturentafel kann beispielsweise dem Frontbereich des Beifahrersitzes eines Kraftfahrzeuges zugeordnet sein.

Das erfindungsgemäße Kraftfahrzeug weist ein Innenverkleidungsteil der zuvor beschriebenen Art auf. Hierbei können beispielsweise auch mehrere derartiger Innenverkleidungsteile im Innenraum eines Kraftfahrzeuges angeordnet sein.

Die Erfindung wird im Folgenden anhand von beispielhaften Ausführungsformen unter Bezugnahme auf die beigefügten Zeichnungen näher erläutert. Es zeigen:
- Fig. 1: eine schematische Seitenansicht des erfindungsgemäßen Innenverkleidungsteiles im Querschnitt mit geöffneter Abdeckung und
- Fig. 2: eine schematische Darstellung des erfindungsgemäßen Innenverkleidungsteiles in Draufsicht im geschlossenen Zustand.

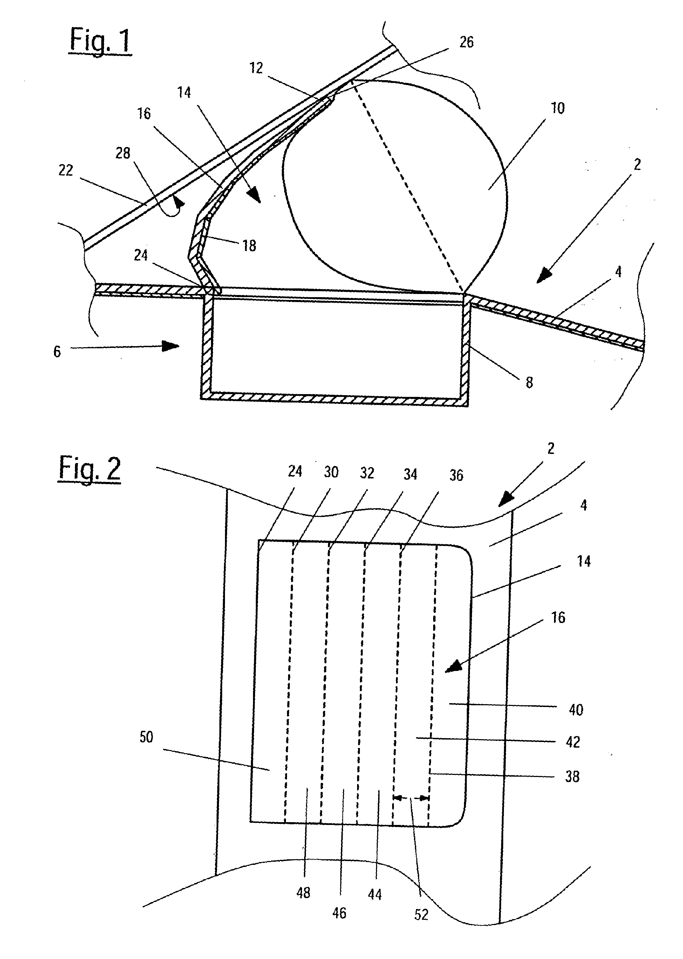

Die Fig. 1 zeigt ein erfindungsgemäßes innenverkleidungsteil 2 innerhalb eines Kraftfahrzeuges (nicht dargestellt) . Das Innenverkleidungsteil 2 ist in dieser Ausführungsform als Armaturentafel 4 ausgebildet, die im Frontbereich 6 des Kraftfahrzeuges angeordnet ist.

Unterhalb der Armaturentafel 4 ist ein Lagerbehälter 8 vorgesehen, in dem ein aufblasbarer Gassack 10 verstaut ist. Der Lagerbehälter 8 ist im Normalfall mit einer Abdeckung 12 verschlossen. Die Armaturentafel 4 weist eine Austrittsöffnung 14 auf, durch die bei einem Notfall, beispielsweise bei einem Auffahrunfall, der sich explosionsartig aufblasende Gassack 10 austreten kann.

Die Abdeckung 12 weist eine Oberseite 16 und eine Unterseite 18 auf. In der gezeigten Ausführungsform ist die Abdeckung 12 mit einem festen Ende 20 der Frontscheibe 22 zugewandt. An dem festen Ende 20 ist die Abdeckung 12 mit einem Schwenkmittel 24 versehen. Mit diesem Schwenkmittel 24 ist die Abdeckung 12 an der Armaturentafel 4 schwenkbar angelenkt.

Beim unfallbedingten explosionsartigen Aufblasen des Gassackes 10 wird die Abdeckung 12 mit ihrem freien Ende 26 in Richtung der Frontscheibe 22 geschwenkt und die Austrittöffnung 14 freigegeben. Die Abdeckung 12 gelangt dabei mit ihrer Oberseite 16 in den Bereich der Innenseite 28 der Frontscheibe 22 und der Gassack 10 kann sich frei in Richtung des Fahrgastraumes (nicht dargestellt) entfalten.

Wie in der Fig. 2 dargestellt, umfasst die Abdeckung 12 eine Vielzahl von Sollknickstellen 30, 32, 34, 36, 38. Die Sollknickstellen 30, 32, 34, 36, 38 sind parallel zu dem Schwenkmittel 24 angeordnet. Sie sind vorzugsweise geradlinig durchgehend ausgebildet, können beispielsweise aber auch strichpunktiert oder beliebig linienförmig sein.

Die Sollknickstellen 30, 32, 34, 36, 38 unterteilen die Abdeckung 12 in eine Vielzahl von Segmenten 40, 42, 44, 46, 48, 50. Die Segmente 40, 42, 44, 46, 48, 50 können unterschiedlich groß sein.

Die Sollknickstellen 30, 32, 34, 36, 38 können in unterschiedlichen Abständen 52 in der Abdeckung 12 angeordnet sind. Die Segmente 40, 42, 44, 46, 48, 50 sind relativ zueinander knickbeweglich. Durch diese Relativbewegung lassen sich die. Segmente 40, 42, 44, 46, 48, 50 der Abdeckung 12 faltenartig zusammenknicken.

Die Abdeckung 12 kann im Bedarfsfall sehr schnell aus der Schussrichtung des sich explosionsartig aufblasenden Gassackes 10 ausweichen und die Austrittsöffnung 14 des Lagerbehälters 8 freigeben. Die Ausdehnung des Gassackes 10 wird nicht eingeengt oder behindert.

Im geschlossenen Zustand schließt die Oberseite 16 der Abdeckung 12 bündig mit dem Innnerverkleidungsteil 2 ab. Die Oberseite 16 der Abdeckung 12 weist eine gleichmäßige Oberflächenbeschaffenheit auf, die gleichartig mit dem Innenverkleidungsteil 2 ist.

Die Sollknickstellen 30, 32, 34, 36, 38 sind als Vertiefungen ausgebildet und können ein U-förmiges Profil aufweisen. Dies ist dann besonders vorteilhaft, wenn die Abdeckung 12 als relativ kleine Fläche ausgebildet ist, beispielsweise wenn ein derartiges Innenverkleidungsteil 2 die Innenverkleidung einer Tür ist. Das U-förmige Profil stellt stets eine hohe Knickbeweglichkeit der miteinander verbundenen Segmente 40, 42, 44, 46, 48, 50 auf engstem Raum sicher.

Bei einer großflächigen Abdeckung 12 können die Vertiefungen der Sollknickstellen 30, 32, 34, 36, 38 ein V-förmiges Profil aufweisen. Dies gewährleistet eine ausreichend hohe Stabilität der miteinander verbundenen Segmente 40, 42, 44, 46, 48, 50 und damit des gesamten Innenverkleidungsteiles 2.

Die Sollknickstellen 30, 32, 34, 36, 38 sind in der Oberseite 16 oder in der Unterseite 18 der Abdeckung 12 angeordnet. Sie können aber auch abwechselnd sowohl in der Oberseite 16 als auch in der Unterseite 18 der Abdeckung 12 angeordnet sein.

Durch diese Anordnung der Sollknickstellen 30, 32, 34, 36, 38 in der Oberseite 16, in der Unterseite 18 oder abwechselnd in der Oberseite 16 und in der Unterseite 18 kann die Art der Relativbewegung der einzelnen Segmente 40, 42, 44, 46, 48, 50 der Abdeckung 12 beeinflusst werden. Je nach Größe des in dem Kraftfahrzeug zur Verfügung stehenden Raumes und ihrer dadurch bedingten Geometrie kann so Einfluss auf die Art und Weise genommen werden, wie die Abdeckung 12 aus der Schussrichtung des Gassackes 10 ausweichen soll.

Die Vertiefungen der Sollknickstellen 30, 32, 34, 36, 38 werden vorzugsweise in die Oberseite 16 oder die Unterseite 18 der Abdeckung 12 gelasert. Durch Lasern wird das Material der Abdeckung 12 verdichtet. Es entstehen formstabile und knickbewegliche Vertiefungen, bei deren Herstellung keine Bearbeitungsspäne oder dgl. anfallen.

### Bezugszeichenliste

- 2: Innenverkleidungsteil
- 4: Armaturentafel
- 6: Frontbereich
- 8: Lagerbehälter
- 10: Gassack
- 12: Abdeckung
- 14: Austrittsöffnung
- 16: Oberseite
- 18: Unterseite
- 20: festes Ende
- 22: Frontscheibe
- 24: Schwenkmittel
- 26: freies Ende
- 28: Innenseite
- 30: Sollknickstelle
- 32: Sollknickstelle
- 34: Sollknickstelle
- 36: Sollknickstelle
- 38: Sollknickstelle
- 40: Segment
- 42: Segment
- 44: Segment
- 46: Segment
- 48: Segment
- 50: Segment
- 52: Abstand

## Patentansprüche

1. Innenverkleidungsteil für ein Kraftfahrzeug mit einer Austrittsöffnung für einen aufblasbaren Gassack, wobei die Austrittsöffnung von einer Abdeckung verdeckt ist, die mit einem Schwenkmittel an dem Innenverkleidungsteil angelenkt ist, **dadurch gekennzeichnet, dass** die Abdeckung (12) mit parallel zu dem Schwenkmittel (24) verlaufenden Sollknickstellen (30, 32, 34, 36, 38) versehen ist.

2. Innenverkleidungsteil für ein Kraftfahrzeug nach Anspruch 1, **dadurch gekennzeichnet, dass** die Sollknickstellen (30, 32, 34, 36, 38) geradlinig ausgebildet sind.

3. Innenverkleidungsteil für ein Kraftfahrzeug nach einem der Ansprüche 1 oder 2, **dadurch gekennzeichnet, dass** die Sollknickstellen (30, 32, 34, 36, 38) linienförmig, vorzugsweise durchgehend, ausgebildet sind.

4. Innenverkleidungsteil für ein Kraftfahrzeug nach einem der Ansprüche 1 oder 2, **dadurch gekennzeichnet, dass** die Sollknickstellen (30, 32, 34, 36, 38) strichpunktiert ausgebildet sind.

5. Innenverkleidungsteil für ein Kraftfahrzeug nach einem der vorangehenden Ansprüche, **dadurch gekennzeichnet, dass** die Sollknickstellen (30, 32, 34, 36, 38) gelasert sind.

6. Innenverkleidungsteil für ein Kraftfahrzeug nach einem der vorangehenden Ansprüche, **dadurch gekennzeichnet, dass** die Sollknickstellen (30, 32, 34, 36, 38) Material verdichtend gelasert sind.

7. Innenverkleidungsteil für ein Kraftfahrzeug nach einem der Ansprüche 1 bis 6, **dadurch gekennzeichnet, dass** die Sollknickstellen (30, 32, 34, 36, 38) in Einbaulage in der oberseite (16) der Abdeckung (12) als längs verlaufende Vertiefungen ausgebildet sind.

8. Innenverkleidungsteil für ein Kraftfahrzeug nach einem der Ansprüche 1 bis 6, **dadurch gekennzeichnet, dass** die Sollknickstellen (30, 32, 34, 36, 38) in Einbaulage in der Unterseite (18) der Abdeckung (12) als längs verlaufende Vertiefungen ausgebildet sind.

9. Innenverkleidungsteil für ein Kraftfahrzeug nach einem der Ansprüche 1 bis 6, **dadurch gekennzeichnet, dass** die Sollknickstellen (30, 32, 34, 36, 38) in Einbaulage abwechselnd in der Oberseite (16) und in der Unterseite (18) der Abdeckung (12) als längs verlaufende Vertiefungen ausgebildet sind.

10. Innenverkleidungsteil für ein Kraftfahrzeug nach einem der vorangehenden Ansprüche, **dadurch gekennzeichnet, dass** die Sollknickstellen (30, 32, 34, 36, 38) die Abdeckung (12) in Segmente (40, 42, 44, 46, 48, 50) unterteilen.

11. Innenverkleidungsteil für ein Kraftfahrzeug nach Anspruch 10, **dadurch gekennzeichnet, dass** die Segmente (40, 42, 44, 46, 48, 50) in den Sollknickstellen (30, 32, 34, 36, 38) relativ zueinander knickbeweglich sind.

12. Innenverkleidungsteil für ein Kraftfahrzeug nach einem der vorangehenden Ansprüche, **dadurch gekennzeichnet, dass** die Vertiefungen der Sollknickstellen (30, 32, 34, 36, 38) ein U-förmiges Profil aufweisen.

13. Innenverkleidungsteil für ein Kraftfahrzeug nach einem der Ansprüche 1 bis 11, **dadurch gekennzeichnet, dass** die Vertiefungen der Sollknickstellen (30, 32, 34, 36, 38) ein V-förmiges Profil aufweisen.

14. Innenverkleiduntisteil für ein Kraftfahrzeug nach einem der vorhergehenden Ansprüche, **dadurch gekennzeichnet, dass** die Oberseite (16) der Abdeckung (12) bündig mit dem Innenverkleidungsteil (2) abschließt.

15. Innenverkleidungsteil für ein Kraftfahrzeug nach einem der vorhergehenden Ansprüche, **dadurch gekennzeichnet, dass** die Oberseite (16) der Abdeckung (12) die gleiche Oberflächenstruktur wie das Innenverkleidungsteil (2) aufweist.

16. Innenverkleidungsteil für ein Kraftfahrzeug nach einem der vorangehenden Ansprüche, **dadurch gekennzeichnet, dass** die Abdeckung (12) mit ihrer Oberseite (16) in Richtung der Innenseite (28) einer Frontscheibe (22) des Kraftfahrzeuges öffnend ausgebildet ist.

17. Innenverkleidungsteil für ein Kraftfahrzeug nach einem der vorangehenden Ansprüche, **dadurch gekennzeichnet, dass** das Innenverkleidungsteil (2) eine Armaturentafel (4) ist.

18. Kraftfahrzeug mit einem Innenverkleidungsteil nach einem der vorangehenden Ansprüche.
